# FASCICULE DE BREVET EUROPEEN

(11) **EP 2 700 437 B1**
(45) Date de publication et mention de la délivrance du brevet: **11.04.2018**
(21) Numéro de dépôt: 13180323.1
(22) Date de dépôt: 14.08.2013
(51) Int. Cl.: B01D 35/30, B01D 36/00, F02M 37/22

(54) **FILTRE À CARBURANT AVEC COMPARTIMENT INFÉRIEUR DE COLLECTE D'EAU, CARTOUCHE FILTRANTE POUR UN TEL FILTRE ET PROCÉDÉ DE FABRICATION D'UNE TELLE CARTOUCHE**
KRAFTSTOFFFILTER MIT UNTEREM AUFFANGKASTEN FÜR WASSER, FILTERKARTUSCHE FÜR EINEN SOLCHEN FILTER UND HERSTELLUNGSVERFAHREN FÜR EINE SOLCHE KARTUSCHE
FUEL FILTER WITH BOTTOM COMPARTMENT FOR COLLECTING WATER, FILTERING CARTRIDGE FOR SUCH A FILTER AND METHOD OF PRODUCING SUCH A CARTRIDGE

(30) Priorité: 23.08.2012 FR 1257949
(43) Date de publication de la demande: 26.02.2014
(73) Titulaire: SOGEFI FILTRATION, 78280 Guyancourt (FR)
(72) Inventeur: Berland, Yann, 78280 Guyancourt (FR); Vin, Sébastien, 78490 Mere (FR); Sanet, Fabien, 78990 Elancourt (FR)
(74) Mandataire: Cabinet Plasseraud

(56) Documents cités:
- US-A- 5 084 170
- US-A- 6 139 738
- US-A1- 2008 135 469
- US-A1- 2009 078 626
- US-A1- 2010 101 993

## Description

La présente invention est relative aux filtres à liquide, et en particulier aux filtres à carburant (typiquement gazole) séparant l'eau contenue dans le carburant et comportant un compartiment inférieur pour collecter cette eau.

Plus particulièrement, l'invention concerne un filtre à carburant séparateur d'eau, comportant :
- un boîtier externe présentant un fond et comprenant une pièce d'obturation (couvercle) amovible par rapport au reste du boîtier, la pièce d'obturation comprenant une paroi latérale tubulaire avec une extrémité supérieure annulaire entourant une ouverture qui est de préférence au moins aussi large que le fond, de sorte que la pièce d'obturation forme une cuve qui s'étend entre ledit fond et l'extrémité supérieure, le boîtier délimitant un volume intérieur et présentant une entrée de carburant brut et une sortie de carburant filtré agencées à distance de la pièce d'obturation ;
- un élément filtrant disposé dans un compartiment supérieur du volume intérieur, l'élément filtrant comportant une extrémité supérieure, une extrémité inférieure à distance du fond et un média filtrant sensiblement annulaire s'étendant autour d'un axe central entre l'extrémité supérieure et l'extrémité inférieure, le média filtrant ayant une face interne qui délimite un espace intérieur, l'élément filtrant étant adapté pour séparer l'eau dans l'espace intérieur ;
- un compartiment inférieur du volume intérieur délimité par ladite pièce d'obturation et dans lequel de l'eau séparée peut s'accumuler, l'élément filtrant délimitant une zone amont communiquant avec l'entrée de carburant brut et une zone aval communiquant avec la sortie de carburant filtré.

Le document US 4 372 847 décrit un exemple d'un tel filtre à carburant, en particulier à gazole, utilisé dans des véhicules à moteur à explosion (domaine automobile notamment). Dans ce filtre, l'élément filtrant forme une cartouche et est placé suffisamment à distance du fond (voir figures 2 et 8 de ce document) pour permettre une collecte de l'eau séparée. L'élément filtrant est monté de façon telle que le seul circuit possible pour le carburant de l'entrée à la sortie passe à travers le média filtrant, depuis un espace annulaire externe vers l'espace intérieur. L'eau est séparée du côté interne du média filtrant et les gouttes tombent sur le fond du boîtier.

Un intérêt de ce type de filtre est qu'il présente un composant de boîtier pourvu d'une paroi séparatrice qui s'étend transversalement au-dessus de la zone de décantation d'eau formée au niveau du compartiment inférieur (zone en aval du filtre). Ainsi, lors des opérations de maintenance du filtre, en particulier en cas de rechange de l'élément filtrant situé au-dessus de la paroi séparatrice, on minimise le risque de contamination de la zone de décantation d'eau.

L'efficacité de séparation d'eau avec ce filtre est élevée car on sépare l'eau du carburant déjà filtré, la collecte de cette eau étant alors réalisée en aval de la filtration, du côté de la zone de carburant propre.

Le filtre décrit dans le document US 4 372 847 présente cependant les inconvénients suivants :
- encombrement relativement important causé par la paroi séparatrice, et
- nécessité de prévoir un joint réalisant parfaitement l'étanchéité entre la zone en amont et l'espace intérieur où l'eau est séparée.

Les filtres décrits dans US 2008/135469 A1 et US 5084170 A présentent une conception avec deux éléments filtrants et trois ou quatre flasques. L'intégration de deux étages de filtration contribue à augmenter aussi l'encombrement du filtre. Il est prévu selon le document US 2008/135469 A1 d'intégrer un module de pompe dans le filtre, dans l'espace interne défini par les deux éléments filtrants. L'eau doit être séparée du carburant par un premier des deux éléments filtrants avant de faire circuler ce carburant dans la pompe. A la sortie de refoulement de la pompe, le flux de carburant est orienté vers le second des deux éléments filtrants. La présence d'un joint près de la zone d'accumulation d'eau séparée est également observée dans les filtres décrits dans le document US 2008/135469 A1.

La présente invention vise à pallier un ou plusieurs des inconvénients précités, tout en conservant l'avantage d'une séparation d'eau efficace.

A cet effet, il est proposé selon l'invention un filtre à carburant séparateur d'eau qui présente une connexion de l'élément filtrant avec la pièce d'obturation afin que la pièce d'obturation et l'élément filtrant forment une cartouche filtrante monobloc (ensemble interchangeable) qui est amovible par rapport au reste du boîtier, dans lequel la pièce d'obturation inclut, sur sa paroi latérale (et de préférence à proximité de son extrémité supérieure), des moyens de montage par exemple du type permettant une rotation relative entre la pièce d'obturation et le reste du boîtier, et dans lequel l'extrémité inférieure de l'élément filtrant présente un flasque qui sépare la zone amont du compartiment inférieur et qui comprend :
- une portion radiale s'étendant perpendiculairement à l'axe central,
- au moins un conduit de communication entre l'espace intérieur et le compartiment inférieur, permettant de faire passer de l'eau au travers de la portion radiale ; et
- un bord externe annulaire agencé à la périphérie de la portion radiale, formant une barrière étanche entre la zone amont et le compartiment inférieur, le bord externe étant fixé de manière étanche à l'extrémité supérieure de la pièce d'obturation dans une zone annulaire de fixation pour réaliser la connexion de l'élément filtrant, la zone annulaire de fixation étant décalée radialement vers l'extérieur par rapport à une face externe du média filtrant.

Grâce à cet ancrage permanent du flasque inférieur de l'élément filtrant sur la pièce d'obturation, il est permis de séparer de façon étanche la zone de décantation d'eau en fond de boîtier de la zone de carburant sale du filtre sans utiliser de joint technique. De plus, on facilite l'opération de rechange de la cartouche et on supprime les problèmes de contamination de la zone de décantation d'eau (zone en aval du filtre) lors des opérations de maintenance du filtre. Le filtre peut donc posséder uniquement un joint au niveau de la fixation amovible entre la paroi latérale externe de la pièce d'obturation et une tête de filtre formant le reste du boîtier.

De manière très avantageuse, cet agencement permet en outre de conserver une conception simple de l'élément filtrant et de minimiser l'encombrement de la tête de filtre.

Selon une particularité, l'élément filtrant sépare l'eau dans l'espace intérieur qui communique, du côté de l'extrémité supérieure de l'élément filtrant, avec la sortie de carburant filtré.

Selon une particularité, le bord externe annulaire est entouré par une face interne de l'extrémité supérieure de la pièce d'obturation et présente une face radialement externe fixée de manière étanche à la pièce d'obturation, par exemple par soudure, collage, montage serrant ou surmoulage sur la face interne de ladite extrémité supérieure. Ce type de connexion présente l'avantage de ne pas interférer avec la face latérale externe de la pièce d'obturation ni avec le fond. Cela permet alors de placer sur la face latérale externe des reliefs saillants et/ou des cavités sans risque d'altération lors de l'ancrage de l'élément filtrant, pour permettre la fixation amovible sur le boîtier externe. Pour le fond, il en résulte aussi une flexibilité pour positionner le cas échéant une vis de purge ou autre organe similaire permettant de vider l'eau séparée dans le compartiment inférieur.

Selon une autre particularité, le bord externe annulaire du flasque présente une interface de liaison avec la pièce d'obturation incluant deux surfaces périphériques formant entre elles un angle non nul, de préférence un angle d'environ 90°. Cette disposition permet de renforcer l'ancrage de l'élément filtrant sans complexifier l'extrémité supérieure de la pièce d'obturation.

Selon une autre particularité, l'au moins un conduit de communication est décalé radialement par rapport à l'axe central et s'étend à proximité de la face interne du média filtrant. Le flasque peut alors obturer la zone centrale d'accès à la zone propre et un effet de barrière physique est obtenu pour s'opposer à une remontée de l'eau vers la sortie de carburant.

Selon une autre particularité, le flasque s'étend globalement selon un plan transversal perpendiculaire à l'axe central et les moyens de montage comprennent un filetage externe qui s'étend entre le plan transversal et le fond. Avec cette disposition, le montage étanche de la cartouche peut être rapide.

Selon une autre particularité, le flasque comporte une collerette parallèle à la portion radiale et en contact axial avec l'extrémité supérieure de la pièce d'obturation, ce grâce à quoi le média filtrant présente une extrémité axiale inférieure logée à l'intérieur de la pièce d'obturation. Dans cette option, la collerette est typiquement décalée axialement vers le haut par rapport à la portion radiale. Cette disposition permet de minimiser l'encombrement en hauteur du filtre, en particulier lorsque la pièce d'obturation présente une hauteur significative qui permet une bonne prise en main par un opérateur (ce qui est utile pour faire tourner la cartouche lors de son montage).

Dans divers modes de réalisation du filtre selon l'invention, on peut éventuellement avoir recours en outre à l'une et/ou à l'autre des dispositions suivantes :
- le flasque utilisé pour la connexion à la pièce d'obturation est un flasque inférieur de l'élément filtrant qui présente en outre un flasque supérieur, le boîtier comportant une tête de filtre qui présente l'entrée et la sortie de carburant, la tête de filtre comportant un conduit séparateur relié à la sortie et qui forme un organe mâle tubulaire en contact étanche annulaire avec ou relié de façon étanche à un bord interne du flasque supérieur et/ou un bord interne du-flasque inférieur ;
- la zone amont s'étend autour du conduit séparateur et inclut un espace annulaire externe formé entre la face externe du média filtrant et une paroi tubulaire du boîtier externe, au-dessus du bord externe annulaire du flasque inférieur ;
- le flasque supérieur et le flasque inférieur comportent chacun une portion radiale ayant une épaisseur déterminée, de préférence identique pour les deux flasques, cette épaisseur étant inférieure à l'épaisseur minimale de la pièce d'obturation (l'élément filtrant peut ainsi être réalisé en minimisant la quantité de matière plastique au niveau des flasques et peut, le cas échéant, être utilisé de manière optimale dans un autre type de filtre séparateur d'eau, sans connexion permanente avec une partie mobile du boîtier).

Par ailleurs, l'invention a également pour objet une cartouche filtrante adaptée pour coopérer dans un filtre selon l'invention (en formant ladite cartouche amovible), dans le but de simplifier l'opération de rechange.

A cet effet, il est proposé une cartouche filtrante d'un seul tenant (monobloc) et qui comprend :
- un élément filtrant du type comme défini ci-dessus et adapté pour séparer l'eau dans une zone de séparation d'eau au-dessus du deuxième flasque (par exemple dans l'espace intérieur),
- un compartiment inférieur d'accumulation d'eau séparée, délimité sous le deuxième flasque par une pièce d'obturation telle que définie ci-dessus et formant une cuve qui s'étend entre le fond et l'extrémité supérieure de la pièce d'obturation,
la pièce d'obturation comportant des moyens de fixation amovible pour une fixation avec une tête de filtre, ces moyens de fixation étant agencés sur la paroi latérale de la pièce d'obturation et permettant, de préférence, une rotation relative entre cette dernière et le reste du boîtier, le deuxième flasque comprenant :
- une portion radiale s'étendant perpendiculairement à l'axe central ;
- au moins un conduit de communication entre la zone de séparation d'eau au-dessus du deuxième flasque et le compartiment inférieur, permettant de faire passer de l'eau au travers de la portion radiale ; et
- un bord externe annulaire agencé à la périphérie de la portion radiale et fixé de manière étanche à ladite pièce d'obturation pour réaliser une connexion de l'élément filtrant à distance du fond, de sorte que le compartiment inférieur d'accumulation d'eau ne puisse être approvisionné qu'à travers l'au moins un conduit de communication, le bord externe annulaire présentant une face radialement externe fixée de manière étanche à l'extrémité supérieure.

Il est en outre prévu un procédé pour fabriquer la cartouche selon l'invention avec un ancrage permanent d'un flasque de l'élément filtrant sur la pièce d'obturation du boîtier. Le procédé comprend les étapes consistant essentiellement à :
- former le compartiment d'accumulation d'eau dans un volume intérieur d'une pièce d'obturation qui forme une partie inférieure amovible d'un boîtier ; et
- assembler un élément filtrant avec la pièce d'obturation, l'élément filtrant comprenant un premier flasque formant une extrémité supérieure, un deuxième flasque formant une extrémité inférieure et un média filtrant sensiblement annulaire qui s'étend autour d'un axe central entre les deux flasques, le média filtrant ayant une face interne qui délimite un espace intérieur ;
l'assemblage de l'élément filtrant comprenant une fixation étanche permanente sur une surface annulaire de la pièce d'obturation, par soudure, collage, montage serrant ou par surmoulage, d'un bord externe annulaire agencé à la périphérie de la portion radiale du deuxième flasque, de façon à ce qu'une face radialement externe définissant un périmètre extérieur du bord externe soit fixée de manière étanche à la pièce d'obturation, ce grâce à quoi le compartiment d'accumulation d'eau ne peut être approvisionné que par l'intermédiaire d'au moins un conduit de communication du deuxième flasque.

Selon une particularité, l'assemblage de l'élément filtrant avec la pièce d'obturation est réalisé par surmoulage et peut comprendre les étapes consistant essentiellement à :
- placer l'élément filtrant et la pièce d'obturation en contact l'un de l'autre ou à proximité l'un de l'autre dans un moule, par exemple un moule fermé, le deuxième flasque faisant face à la pièce d'obturation ;
- injecter au moins une matière plastique dans le moule pour réaliser un cordon de surmoulage sur le deuxième flasque de l'élément filtrant, de façon à réaliser une connexion étanche entre une paroi latérale de la pièce d'obturation et le bord externe du deuxième flasque.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe illustrant un filtre selon un mode de réalisation préféré de l'invention ;
- la figure 2 représente une partie du filtre de la figure 1 ; et
- la figure 3 est une vue en coupe illustrant une cartouche filtrante propre à être utilisée dans le filtre à carburant de la figure 1.

Sur les différentes figures, les mêmes références désignent des éléments identiques ou similaires.

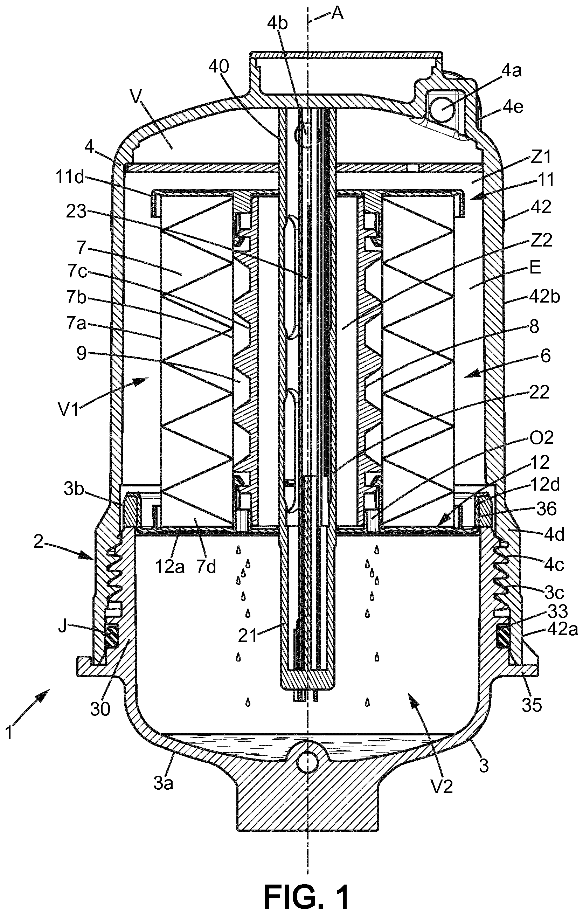

La figure 1 représente un mode de réalisation préféré du filtre à liquide (gazole ou carburant similaire) avec séparateur d'eau. Le liquide à filtrer sera appelé gazole dans ce qui suit, sans que ce soit limitatif.

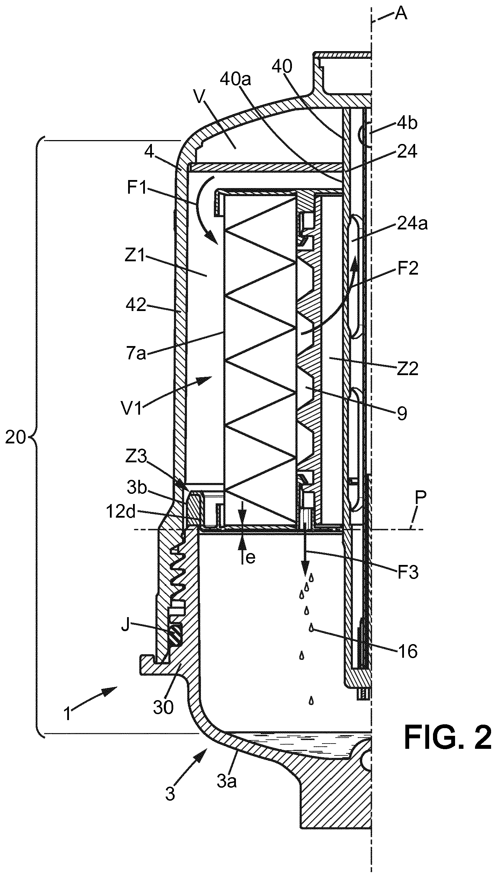

Le filtre 1 comprend un boîtier 2 qui présente une paroi supérieure et une paroi inférieure. Le boîtier 2 est raccordable de façon interchangeable à des conduites d'un système d'alimentation en carburant d'un véhicule à moteur à combustion. Comme cela est visible sur la figure 2, une paroi externe latérale 20 s'étend depuis la paroi supérieure jusqu'à une paroi inférieure du boîtier 2.

Le boîtier 2 du filtre 1 peut présenter une forme sensiblement cylindrique de révolution autour d'un axe central. Dans l'exemple non limitatif des figures, la paroi inférieure du boîtier 2 est définie ou fait partie d'une pièce d'obturation 3 de type couvercle en métal ou en plastique conformé en cuve. Cette pièce d'obturation 3 est fixée de manière amovible par rapport au reste du boîtier 2. La paroi supérieure est formée par une tête de filtre 4 qui est reliée de manière étanche à la pièce d'obturation 3. Comme illustré sur la figure 1, cette tête de filtre 4 présente une entrée de carburant 4a ou autre liquide comparable à filtrer, ainsi qu'une sortie de carburant 4b ou autre liquide filtré pour permettre la circulation et la filtration du carburant à l'intérieur du filtre 1 séparateur d'eau.

Comme cela est visible sur les figures 1 et 2, le boîtier 2 se décompose ici en plusieurs pièces, ici deux pièces, réalisées de préférence en matière plastique rigide :
- la pièce d'obturation 3 conformée en cuve qui présente un fond 3a à partir duquel s'étend vers le haut une paroi latérale annulaire 30, la pièce d'obturation 3 formant un réservoir d'accumulation d'eau (la hauteur de la cuve est par exemple supérieure à 10 mm et de préférence dépasse 15 ou 20 mm) ; et
- la tête de filtre 4 qui est fixée à la paroi latérale 30 et définit dans cet exemple tout ou partie d'une chambre pour loger l'élément filtrant 6 du filtre 1.

Selon une variante, la tête de filtre 4 peut s'étendre essentiellement au-dessus de l'élément filtrant 6. Dans ce cas, une paroi latérale peut prolonger axialement l'extrémité supérieure 3b de la pièce d'obturation 3. Optionnellement, on peut aussi prévoir un composant de boîtier (non représenté) qui s'étend autour de l'axe central entre des extrémités axiales ouvertes, respectivement supérieure et inférieure, le composant de boîtier ayant une paroi latérale cylindrique qui définit tout ou partie de la chambre pour loger l'élément filtrant 6 du filtre 1. Dans ce cas, la tête de filtre 4 est fixée à l'extrémité supérieure du composant de boîtier, tandis que la pièce d'obturation 3 vient se fixer sur l'extrémité inférieure du composant de boîtier. Le composant de boîtier forme alors un adaptateur de connexion entre la pièce d'obturation 3 et la tête de filtre 4. Dans tous les cas, il est prévu que l'élément filtrant 6 puisse être remplacé en retirant la pièce d'obturation 3. Un seul élément filtrant 6 est ici prévu, ce qui limite l'encombrement (notamment en hauteur) du filtre 1.

Dans l'exemple non limitatif de la figure 1, la tête de filtre 4 présente des moyens de fixation amovible permettant à la pièce d'obturation 3 de fermer de manière étanche le boîtier 2. Ces moyens de fixation comportent de préférence un filetage 4c formé sur une portion inférieure 4d de la tête de filtre 4. Un joint J peut être prévu à titre optionnel pour améliorer l'étanchéité entre la tête de filtre 4 et l'extrémité supérieure 3b de la pièce d'obturation 3. Le joint J, par exemple en matière élastomère, peut constituer l'unique joint torique du filtre 1 (bien entendu, ceci n'exclut pas la présence d'autres joints). Ainsi, la pièce d'obturation 3 est en contact (ici au niveau de sa face externe) avec seulement un joint J.

Ici le filetage 4c est agencé sur la face interne de la portion inférieure 4d et s'engage avec un filetage 3c correspondant formé sur la face externe de la paroi latérale 30. On peut voir sur la figure 1 que le joint J peut être placé en dessous du filetage 4c et logé dans une gorge externe 33 annulaire formée sur la périphérie de la paroi latérale 30. La paroi latérale 30 peut éventuellement présenter une bride 35 ayant une face supérieure 35a qui forme une butée d'appui pour l'extrémité inférieure 42a de la paroi latérale 42 de la tête de filtre 4. D'autre modes de fixation amovible de la pièce d'obturation 3 peuvent être utilisés, par exemple avec une connexion de type baïonnette. Plus généralement, on comprend que la paroi latérale 30 est pourvue, de préférence à proximité de l'extrémité supérieure 3b, de moyens de montage permettant une rotation relative entre la pièce d'obturation 3 et le reste du boîtier 2.

L'entrée de carburant 4a et la sortie de carburant 4b sont ici situées dans une partie supérieure 4e de la tête de filtre 4, à distance axiale de l'extrémité supérieure 3b de la pièce d'obturation 3.

Le boîtier 2 délimite un volume intérieur V dans lequel est disposé l'élément filtrant 6 qui est ici de forme annulaire. L'élément filtrant 6 présente un média filtrant 7, un tube interne 8, un premier flasque appelé dans ce qui suit flasque supérieur 11, un deuxième flasque appelé dans ce qui suit flasque inférieur 12. Dans des variantes de réalisation, le flasque supérieur 11 peut être considéré comme optionnel et l'élément filtrant 6 est dans ce cas fixé différemment à la tête de filtre 4 ou composant similaire du boîtier 2. Le tube interne 8 rigidifie l'élément filtrant 6 et peut éventuellement permettre de canaliser du carburant. Le tube interne 8 s'étend ici entre le flasque supérieur 11 et le flasque inférieur 12.

En référence à la figure 1, le média filtrant 7 s'étend de préférence autour d'un axe central A qui peut être confondu avec l'axe central du boîtier 2 ou éventuellement être parallèle à celui-ci dans des variantes de réalisation. Dans l'exemple des figures 1 et 2, le média filtrant 7 s'étend autour de cet axe central A entre une extrémité supérieure et une extrémité inférieure, au-dessus de la zone de connexion entre la pièce d'obturation 3 et le reste du boîtier 2. L'extrémité supérieure du média filtrant 7 est fixée de manière étanche au flasque supérieur 11 tandis que l'extrémité inférieure du média filtrant 7 est fixée de manière étanche au flasque inférieur 12.

Le média filtrant 7 présente une face externe 7a qui délimite avec le boîtier 2 un espace annulaire externe E. Le média filtrant 7 présente aussi une face interne 7b qui délimite un espace intérieur 9 creux. Le média filtrant 7 retient les impuretés notamment solides et a de préférence une fonction de coalesceur, de façon à séparer l'eau. Au moins une toile hydrophobe ou autre élément analogue pour la séparation d'eau peut être prévue du côté de la face interne 7b pour permettre d'évacuer l'eau séparée dans l'espace intérieur 9. Le média filtrant 7 peut être d'un genre connu en soi et ne sera pas davantage décrit ici. Dans un mode de réalisation préféré, il peut aussi être prévu un élément de séparation d'eau 7c supporté par ou intégré dans le tube interne 8 (par exemple sous la forme d'une toile hydrophobe surmoulée sur la face interne du tube 8), en aval du média filtrant 7. Dans ce cas l'eau peut s'écouler dans l'espace entre le média filtrant 7 et la toile (cet espace est ici annulaire et délimité intérieurement par le diamètre interne du tube 8). Des ouvertures radiales formées sur le tube interne 8 (non visibles sur la coupe de la figure 1) permettent au carburant de s'écouler vers la zone en aval Z2 après avoir traversé l'élément de séparation d'eau 7c.

En référence à la figure 2, la paroi externe latérale 20 du boîtier 2 s'étend entre la paroi supérieure et la paroi inférieure formant le fond 3a. Cette paroi externe latérale 20 se décompose en deux tronçons comme suit :
- un tronçon supérieur défini par la paroi latérale 42 de la tête de filtre 4, et
- un tronçon inférieur défini par la paroi latérale 30 de la pièce d'obturation 3.

Tandis que la pièce d'obturation 3 vient se fixer sur la tête de filtre 4 de manière amovible, il est prévu une liaison permanente entre la paroi latérale 30 de la pièce d'obturation 3 et le flasque inférieur 12 de l'élément filtrant 6. L'extrémité inférieure de l'élément filtrant 6, par l'intermédiaire de la périphérie de ce flasque inférieur 12, sépare ainsi la zone amont Z1 du compartiment inférieur V2. La paroi latérale 30 de la pièce d'obturation 3 conformé en cuve, et de préférence l'extrémité supérieure 3b, forme ainsi un support permanent pour l'élément filtrant 6. Ainsi, la pièce d'obturation 3 et l'élément filtrant 6 forment une cartouche filtrante 5 d'un bloc qui est amovible par rapport au reste du boîtier 2. Optionnellement, un ou plusieurs piliers internes (non représentés) venus de matière avec le fond 3a de la pièce d'obturation 3 peuvent aussi permettre de supporter l'élément filtrant 6 par un contact et/ou une fixation permanente dans une zone plus centrale, par exemple adjacente au(x) conduit(s) du flasque inférieur 12 permettant la communication entre l'espace intérieur 9 et un compartiment inférieur V2 (zone d'accumulation d'eau) délimité par la pièce d'obturation 3.

Dans sa position de fixation, l'élément filtrant 6 partitionne le volume intérieur V entre une zone Z1 en amont du média filtrant 7 communiquant avec l'entrée 4a et une zone Z2 en aval du média filtrant 7 communiquant avec la sortie 4b.

Dans le filtre tel qu'illustré à la figure 1, on comprend que l'élément filtrant 6 peut être balayé dans la direction radiale, une fois la cartouche filtrante 5 raccordée au reste du boîtier 2. Cet élément filtrant 6 est alors orienté en position de montage suivant un axe vertical (ou autre) du véhicule. En référence à la figure 2, les flèches F1 et F2 montrent le sens de circulation du carburant dans le filtre 1. La zone en amont Z1 par rapport au média filtrant 7 comprend en particulier une zone annulaire située au-dessus de l'élément filtrant 6, adjacente à l'entrée 4a, et un espace annulaire E qui fait le tour du média filtrant 7. Le carburant brut situé dans cet espace annulaire E traverse le média filtrant 7 pour atteindre l'espace intérieur 9, du côté de la zone en aval Z2.

C'est la connexion entre la portion annulaire ou bord annulaire externe 12d du flasque inférieur 12 et la paroi latérale 30 tubulaire de la pièce d'obturation 3 qui forme une barrière étanche entre la zone en amont Z1 et le compartiment inférieur V2 communiquant avec l'espace intérieur 9. Dans un mode de réalisation préféré, le flasque inférieur 12 comporte:
- une portion radiale 12a qui s'étend perpendiculairement à l'axe central A,
- au moins un conduit de communication 02 entre l'espace intérieur 9 et le compartiment inférieur V2, et
- un bord externe annulaire 12d agencé à la périphérie de la portion radiale 12a et formant une barrière étanche entre la zone amont Z1 et le compartiment inférieur V2.

Dans un mode de réalisation préféré, la portion radiale 12a est sensiblement plane et recouvre une extrémité axiale 7d inférieure du média filtrant 7. Le flasque inférieur 12 peut présenter optionnellement une projection annulaire 12c en saillie axialement dans l'espace intérieur 9 et s'étendant le long de l'extrémité axiale 7d inférieure du média filtrant 7 pour maintenir ce dernier.

Pour permettre une flexibilité dans le choix de la hauteur de la pièce d'obturation 3, il peut être avantageux que le flasque inférieur 12 soit globalement aplati. A titre non limitatif, le flasque inférieur 12 peut ainsi s'étendre globalement selon un plan transversal P perpendiculaire à l'axe central A, par exemple sans partie inférieure saillante. Dans l'exemple des figures, on peut voir que les moyens de montage de la cartouche filtrante 5 occupent une position qui est axialement intermédiaire entre le plan transversal P et le fond 3a.

Les conduits de communication 02 peuvent se présenter sous la forme de perçages au travers de la portion radiale 12a ou peuvent de préférence former des conduits qui font saillie vers le haut par rapport au plan transversal P. Les gouttes d'eau 16 obtenues typiquement par coalescence et présentes dans l'espace intérieur 9 peuvent tomber par gravité dans le compartiment inférieur V, en passant au travers de la portion radiale 12a.

En référence à la figure 2, le bord externe 12d du flasque inférieur 12 est fixé de manière étanche à l'extrémité supérieure 3b de la pièce d'obturation 3 dans une zone annulaire Z3 de fixation qui est ici décalée radialement vers l'extérieur par rapport à la face externe 7a du média filtrant 7. Dans une forme de réalisation préférée, la liaison permanente et étanche du flasque inférieur 12 est obtenue par surmoulage, collage, montage serrant ou par soudure entre deux composants en matière plastique. Alternativement ou en complément, un assemblage mécanique peut être utilisé. Un surmoulage et l'utilisation d'une agrafe ou autre pièce supplémentaire peuvent permettre de réaliser une connexion étanche et robuste.

En référence à la figure 1, le bord externe 12d est entouré par une face interne 36 de l'extrémité supérieure 3b et présente une face radialement externe fixée de manière étanche à la pièce d'obturation 3, ici par soudure ou surmoulage sur la face interne 36 et/ou sur une face supérieure de la pièce d'obturation 3. Le bord externe annulaire 12d du flasque inférieur 12 peut par exemple présenter une interface de liaison qui inclut deux surfaces périphériques formant entre elles un angle non nul, de préférence un angle d'environ 90°. L'utilisation d'une collerette située entre la portion radiale 12a et l'extrémité supérieure 3b et qui est décalée au-dessus du plan transversal P peut permettre d'enfoncer axialement l'extrémité inférieure de l'élément filtrant 6 dans la cuve formée par la pièce d'obturation et limiter ainsi l'encombrement en hauteur. Dans les figures, on peut ainsi voir que l'extrémité axiale inférieure 7d du média filtrant est logée à l'intérieur de la pièce d'obturation. Cette configuration permet de réaliser de manière simple la connexion étanche, la face supérieure de la pièce d'obturation formant un appui pour la collerette. Bien entendu, cette option avec collerette n'est aucunement limitative. Dans des variantes de réalisation, le flasque inférieur 12 peut présenter au contraire un bord externe 12d qui s'étend sensiblement dans le plan de la portion radiale 12a ou même une collerette inversée par rapport à l'exemple des figures et fixée sur l'extrémité supérieure 3b.

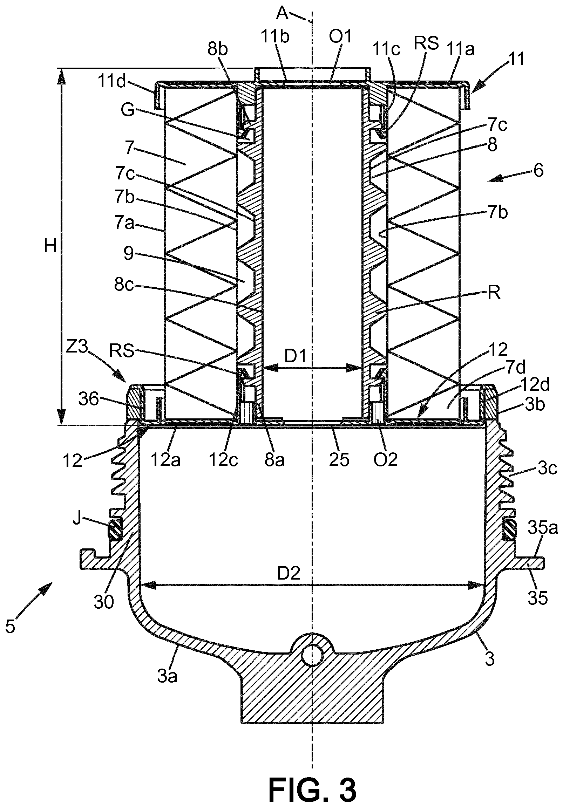

En référence aux figures 2 et 3, on peut voir que l'élément filtrant 6 présente une hauteur H inférieure ou égale à la hauteur de la paroi latérale 42 de la tête de filtre 4. L'élément filtrant 6 est positionné dans le volume intérieur V lors de la connexion de la pièce d'obturation 3 qui supporte et maintient l'élément filtrant 6 à distance du fond 3a. Le flasque inférieur 12 est directement solidarisé sur une face et/ou un rebord supérieur de la paroi latérale 30 qui est adjacent à la paroi externe latérale 20 du boîtier 2. Afin de minimiser l'encombrement de la tête de filtre 4, celle-ci peut présenter une diminution de section entre l'extrémité inférieure 42a de la paroi 42 et la portion 42b entourant l'élément filtrant 6.

L'extrémité inférieure de l'élément filtrant 6 est adaptée pour s'opposer à la circulation de fluide entre le compartiment supérieur V1 et le compartiment inférieur V2, à l'exception des conduits 02 de faible section (la section totale du ou des conduits 02 étant très inférieure à la section de l'extrémité axiale 7d). Ainsi, comme cela est visible sur la figure 2, l'espace intérieur 9 communique par son côté inférieur avec le compartiment inférieur V2 où l'eau peut s'accumuler (flèches F3 pour les gouttelettes 16 d'eau) et par son côté supérieur avec la sortie de carburant filtré 4b (flèche F2 pour le carburant propre).

Dans cet exemple, l'eau séparée par l'élément de séparation d'eau 7c et se présentant sous forme de gouttelettes 16 dans l'espace intérieur 9, tombe par gravité dans le compartiment inférieur V2 au travers d'orifices ou conduit(s) 02 qui sont par exemple formés autour du tube interne 8. Une ouverture centrale du tube interne 8 peut être prévue pour le passage de l'extrémité inférieure 21 d'un organe fonctionnel 22 par exemple pourvu d'un réchauffeur. Un détecteur de niveau d'eau peut être monté dans cet organe fonctionnel et présenter une sonde à l'extrémité inférieure 21 pour détecter un niveau d'eau, ce qui permet de signaler l'atteinte d'un seuil de remplissage du compartiment inférieur V2. Dans l'exemple non limitatif des figures 1 et 2, l'organe fonctionnel 22 présente un ou plusieurs organes chauffants 23 disposés à l'intérieur d'un conduit creux 24 qui présente des ouvertures latérales 24a pour l'évacuation du carburant filtré vers la sortie 4b. Le conduit creux 24 obture de manière étanche une ouverture centrale 25 du flasque inférieur 12 et fait ici saillie vers le bas par rapport à l'extrémité inférieure du flasque inférieur 12.

Un tel organe fonctionnel 22, optionnel, peut se présenter sous d'autres formes comme peut l'apprécier l'homme du métier. En particulier, le conduit creux 24 peut éventuellement être relié à l'entrée 4a et servir dans ce cas à faire circuler le carburant non filtré le long des organes chauffants 23 en amont de la filtration, le conduit creux 24 communiquant également avec l'espace annulaire E. On comprend que dans ce cas, le flasque supérieur 11 peut présenter une ouverture additionnelle pour permettre la circulation du carburant filtré depuis l'espace intérieur 9 jusqu'à la sortie 4b. En l'absence de l'organe fonctionnel 22, une portion tubulaire plus courte peut traverser seulement le flasque supérieur 11 et acheminer le carburant filtré vers la sortie 4b, le flasque inférieur étant alors dépourvu d'ouverture centrale.

Dans une variante de réalisation, le tube interne 8 peut présenter une extrémité inférieure 8a complètement obturée et qui de préférence n'interfère pas avec le ou les conduits 02 d'écoulement d'eau vers le compartiment inférieur V2. La face d'obturation de l'extrémité inférieure 8a est optionnelle lorsque le flasque inférieur 12 est dépourvu d'ouverture centrale et procure déjà un effet de barrière physique qui s'oppose à une remontée de l'eau vers la sortie 4b de carburant, par exemple lors d'un bref à-coup pouvant se produire lors de la conduite d'un véhicule.

Bien que l'exemple représenté montre une connexion annulaire permanente réalisée avec étanchéité entre la paroi latérale 30 de la pièce d'obturation 3 et le flasque inférieur 12 en contact avec le média filtrant 7, il doit être compris qu'une telle connexion annulaire avec contact d'étanchéité sur la paroi latérale 30 de la pièce d'obturation 3 peut aussi être réalisée par une autre forme d'élément formant flasque, par exemple un élément de flasque intégralement formé avec le tube interne 8 et distant de l'extrémité axiale inférieure du média filtrant 7. Plus généralement toute surface appropriée, de préférence tubulaire, de la périphérie externe de l'extrémité inférieure de l'élément filtrant 6 peut être utilisée pour la connexion permanente avec la pièce d'obturation 3, étant entendu que cette connexion forme une étanchéité entre la zone amont Z1 et le compartiment inférieur V2.

La cartouche filtrante 5 intégrant l'élément filtrant 6 va à présent être décrite plus particulièrement en liaison avec les figures 1 et 3.

En référence à la figure 3, la pièce d'obturation 3 et l'élément filtrant 6 forment une unité amovible configurée pour se connecter, de préférence directement, à la tête de filtre 4. Dans cet exemple non limitatif, le flasque supérieur 11 présente une portion radiale 11a sensiblement plane et qui s'étend autour d'une ouverture centrale 01 du flasque supérieur 11. Un bord interne 11b du flasque supérieur 11 délimite cette ouverture centrale 01.

On peut voir sur la figure 1, dans la position de montage de la cartouche filtrante 5, que le bord interne 11b du flasque supérieur 11 est en prise avec un organe mâle tubulaire 40 interne de la tête de filtre 4 qui s'étend autour de l'axe central A. Une face externe 40a de l'organe mâle 40 est en contact étanche annulaire avec le bord interne 11b. Il s'agit d'une option qui n'est pas limitative. Plus généralement, cette étanchéité peut être réalisée radialement ou axialement, avec ou sans joint.

La conception du flasque supérieur 11 est avantageuse en ce qu'elle permet d'éviter d'intégrer dans l'élément filtrant 6 des joints additionnels pour partitionner l'espace situé entre le flasque supérieur 11 et le dessus de la tête de filtre 4. Autrement dit, le flasque supérieur 11 cumule une fonction de maintien du média filtrant 7 et d'assemblage avec la tête de filtre 4.

Ici, les surfaces d'étanchéité de l'élément filtrant 6 sont réalisées par les flasques supérieur 11 et inférieur 12, du côté intérieur pour le flasque supérieur 11 et du côté extérieur pour le flasque inférieur 12. Cette disposition permet de rendre l'élément filtrant 6 plus compact et protège mieux les surfaces d'étanchéité.

Comme cela est visible sur la figure 3, le média filtrant 7 est disposé autour du tube interne 8 qui forme une structure de maintien du média filtrant 7. Le tube interne 8 présente sur sa face externe des reliefs R en contact avec la face interne 7b du média filtrant 7. Plusieurs ouvertures 8c latérales sont prévues sur ce tube interne 8 pour permettre la circulation du carburant propre. Ce tube interne 8 s'étend entre son extrémité inférieure 8a engagée avec le flasque inférieur 12 et une extrémité supérieure 8b engagée avec le flasque supérieur 11. On peut voir sur la figure 3 que l'extrémité inférieure 8a est contenue dans l'espace intérieur 9.

Dans un mode de réalisation préféré, le flasque supérieur 11 et le flasque inférieur 12 sont de préférence des pièces moulées à partir d'une matière plastique. Comme le flasque inférieur 12, le flasque supérieur 11 comprend :
- une portion radiale 11a qui s'étend perpendiculairement à l'axe central A du média filtrant 7, entre un bord interne et un bord externe ;
- une portion tubulaire interne 11c qui s'étend le long de l'extrémité axiale correspondante du média filtrant 7, depuis le bord interne de la portion radiale 11a ; et
- une portion ou bord annulaire externe 11d agencé à la périphérie de la portion radiale 11a.

A titre d'exemple, le bord annulaire externe 11d, 12d des flasques 11, 12 peut s'étendre au moins en partie le long ou à proximité de l'extrémité axiale correspondante du média filtrant 7, depuis le bord externe de la portion radiale 11a, respectivement 12a. Dans le flasque inférieur 12, le bord externe annulaire 12d s'étend aussi radialement vers l'extérieur jusqu'à venir en contact étanche avec la paroi latérale 30 de la pièce d'obturation 3.

Dans l'exemple de la figure 3, la portion tubulaire interne 11c du flasque supérieur 11 comprend un relief RS saillant vers l'intérieur, de préférence annulaire, permettant de maintenir en position le tube interne 8 par engagement dans une gorge G correspondante formée dans l'extrémité supérieure 8b du tube interne 8 (plus généralement, on comprend que des formes de clips ou organes d'encliquetage peuvent être utilisés). On comprend que cette disposition peut permettre de clipser le tube interne 8 sur le flasque supérieur 11. Une disposition similaire peut être adoptée, avec un relief RS, pour la connexion entre le tube interne 8 et le flasque inférieur 12, comme bien visible sur la figure 3. Le tube interne 8 peut être alors clipsé sur le flasque inférieur 12. La portion tubulaire interne 12c peut venir en appui sur le tube interne 8 pour faciliter le centrage de ce tube interne 8 dans le média filtrant 7 et supprimer le cas échéant le jeu axial du tube interne 8 par rapport au reste de l'élément filtrant 6.

L'extrémité inférieure 8a du tube interne 8, ici ouverte mais qui ne débouche pas dans le compartiment inférieur V2, présente une section inférieure à la section de l'espace intérieur 9, de sorte qu'un ou plusieurs conduits 02 définis par le flasque inférieur 12 peuvent être disposés directement sous l'espace intérieur 9. Avec cet agencement, il existe en effet un espace annulaire entre la face externe de l'extrémité inférieure 8a du tube interne 8 et la face interne 7b du média filtrant 7. Cet espace annulaire permet, en association avec les conduits 02, une communication entre l'espace intérieur 9 et le compartiment inférieur V2. L'étanchéité réalisée entre le tube 8 et les flasques inférieur et supérieur 11, 12 permet de ne pas by-passer l'élément de séparation d'eau 7c.

On peut voir sur la figure 3 que la zone Z3 de soudure ou de surmoulage est réalisée au même niveau de hauteur ou plus haut que le plan transversal P. Les flasques supérieur 11 et inférieur 12 sont ici très similaires, la portion radiale 11a ou 12a ayant une épaisseur déterminée e qui peut être identique pour ces flasques 11, 12. Par comparaison avec l'épaisseur de la pièce d'obturation 3, l'épaisseur e est réduite. Plus généralement, l'épaisseur des flasques 11 et 12, et en particulier celle du flasque inférieur 12, est relativement fine, de sorte que le rebord externe annulaire 12d peut présenter une certaine flexibilité qui facilite son positionnement relatif par rapport à la pièce d'obturation 3 ou son placement dans un moule pour former la pièce d'obturation 3.

Lors du procédé d'assemblage de l'élément filtrant 6 sur l'extrémité supérieure 3b de la pièce d'obturation 3, on met en contact une face radialement externe et/ou un rebord du bord externe annulaire 12d avec l'extrémité supérieure 3b, sur une surface annulaire de celle-ci. La fixation permanente est réalisée de préférence par soudure, collage, montage serrant ou par surmoulage du bord externe annulaire 12d, de façon à ce que la ou les faces du bord externe annulaire 12d en contact avec l'extrémité supérieure 3b soit fixée de manière étanche à la pièce d'obturation 3. Dans une forme de réalisation, on peut emboîter le flasque inférieur 12 dans la pièce d'obturation 3, avec un contact contre la face interne 36 et on peut ensuite fixer les parties en contact par thermo-soudure.

Dans le cas d'un surmoulage, on peut successivement :
- placer l'élément filtrant 6 et la pièce d'obturation 3 en contact l'un de l'autre ou à proximité l'un de l'autre dans un moule, par exemple un moule fermé, le flasque inférieur 12 faisant face à la pièce d'obturation 3 (on réalise par exemple un placage des pièces pour pouvoir ensuite injecter de la matière plastique) ;
- injecter au moins une matière plastique dans le moule pour réaliser un cordon de surmoulage sur le flasque inférieur 12 de l'élément filtrant 6, de façon à réaliser une connexion étanche entre une paroi latérale 30 de la pièce d'obturation 3 et le bord externe annulaire 12d du flasque inférieur 12.

Bien entendu, les composants de l'élément filtrant 6 ont été dans ce cas préalablement moulés et assemblés. La pièce d'obturation 3 a été aussi typiquement moulée de manière indépendante. D'autres configurations pour l'assemblage sont possibles, par exemple en moulant la pièce d'obturation dans le même moule servant pour le surmoulage.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que l'entrée de carburant brut 4a et la sortie de carburant filtré 4b soient ici prévues dans la paroi supérieure de la tête de filtre 4, d'autres agencements peuvent être utilisés, par exemple avec une entrée et éventuellement une sortie formée(s) dans une paroi latérale 42, à distance du fond 3a de la pièce d'obturation 3. Plus généralement, les zones d'étanchéité entre l'élément filtrant 6 et la tête de filtre 4 pour isoler la zone en amont Z1 par rapport à la zone en aval Z2 peuvent se présenter sous différentes formes.

Egalement, bien que l'espace intérieur creux 9 a été illustré comme étant délimité par une face interne cylindrique, on comprend que d'autres formes d'espace intérieur peuvent être utilisées, avec par exemple des conformations différentes du média filtrant 7.

Par ailleurs, bien que les figures montrent un filtre 1 dont l'élément filtrant 6 est balayé dans la direction radiale de l'extérieur vers l'intérieur, le sens inverse peut être utilisé. Dans le cas d'une circulation inversée (de type centrifuge), on comprend par exemple que le ou les conduits de communication 02 sont situés à proximité de la zone annulaire Z3 de fixation, tandis que l'ouverture centrale 25 est supprimée ou obturée de façon étanche.

## Revendications

1. Filtre à carburant (1) séparateur d'eau, comportant :
- un boîtier (2) externe présentant un fond (3a) et comprenant une pièce d'obturation (3) amovible par rapport au reste du boîtier, la pièce d'obturation (3) comprenant une paroi latérale (30) tubulaire avec une extrémité supérieure (3b) annulaire entourant une ouverture qui est de préférence au moins aussi large que le fond, de sorte que la pièce d'obturation (3) forme une cuve qui s'étend entre ledit fond (3a) et l'extrémité supérieure (3b), le boîtier (2) délimitant un volume intérieur (V) et présentant une entrée de carburant brut (4a) et une sortie de carburant filtré (4b) agencées à distance de la pièce d'obturation, la pièce d'obturation (3) incluant, sur ladite paroi latérale (30), et de préférence à proximité de l'extrémité supérieure (3b), des moyens de montage entre la pièce d'obturation et le reste du boîtier (2) ;
- un élément filtrant (6) disposé dans un compartiment supérieur (V1) du volume intérieur (V), l'élément filtrant (6) comportant une extrémité supérieure, une extrémité inférieure à distance du fond (3a) et un média filtrant (7) sensiblement annulaire s'étendant autour d'un axe central (A) entre l'extrémité supérieure et l'extrémité inférieure, le média filtrant (7) ayant une face interne (7b) qui délimite un espace intérieur (9) ;
- un compartiment inférieur (V2) du volume intérieur (V) délimité par ladite pièce d'obturation (3) et dans lequel de l'eau séparée peut s'accumuler ;
dans lequel l'élément filtrant (6) délimite une zone amont (Z1) communiquant avec l'entrée de carburant brut (4a) et une zone aval (Z2) communiquant avec la sortie de carburant filtré (4b), l'extrémité inférieure de l'élément filtrant (6) présentant un flasque (12) qui sépare de manière étanche la zone amont (Z1) du compartiment inférieur (V2) et qui comprend :
- une portion radiale (12a) s'étendant perpendiculairement à l'axe central (A),
- au moins un conduit de communication (02) entre le compartiment supérieur (V1) et le compartiment inférieur (V2), permettant de faire passer de l'eau au travers de la portion radiale (12a) ; et
- un bord externe annulaire (12d) agencé à la périphérie de la portion radiale (12a),
**caractérisé en ce que** le filtre comporte en outre une connexion de l'élément filtrant (6) avec la pièce d'obturation (3) afin que la pièce d'obturation (3) et l'élément filtrant (6) forment une cartouche filtrante monobloc qui est amovible par rapport au reste du boîtier (2), ledit bord externe (12d) étant fixé de manière étanche à ladite extrémité supérieure (3b) de la pièce d'obturation (3) dans une zone annulaire (Z3) de fixation pour réaliser ladite connexion de l'élément filtrant (6), la zone annulaire (Z3) de fixation étant décalée radialement vers l'extérieur par rapport à une face externe (7a) du média filtrant (7), le bord externe annulaire (12d) formant une barrière étanche entre la zone amont (Z1) et le compartiment inférieur (V2) ;
**et en ce que** le flasque (12) connecté à la pièce d'obturation (3) est un flasque inférieur de l'élément filtrant (6), un flasque supérieur (11) correspondant à une extrémité supérieure de la cartouche filtrante monobloc étant prévu à l'extrémité supérieure de l'élément filtrant, l'élément filtrant (6) étant adapté pour séparer l'eau dans une zone de séparation d'eau au-dessus dudit flasque inférieur (12).

2. Filtre selon la revendication 1, dans lequel l'élément filtrant (6) est adapté pour séparer l'eau dans l'espace intérieur (9) qui communique, du côté de l'extrémité supérieure de l'élément filtrant (6), avec la sortie de carburant filtré (4b).

3. Filtre selon la revendication 1 ou 2, dans lequel le bord externe (12d) est entouré par une face interne (36) de l'extrémité supérieure (3b) de la pièce d'obturation (3) et présente une face radialement externe fixée de manière étanche à la pièce d'obturation (3) par soudure, collage, montage serrant ou surmoulage sur ladite face interne (36) de l'extrémité supérieure de la pièce d'obturation (3).

4. Filtre selon l'une quelconque des revendications précédentes, dans lequel le bord externe annulaire (12d) du flasque inférieur (12) présente une interface de liaison avec la pièce d'obturation (3) incluant deux surfaces périphériques formant entre elles un angle non nul, de préférence un angle d'environ 90°.

5. Filtre selon l'une quelconque des revendications précédentes, dans lequel ledit au moins un conduit de communication (02) est décalé radialement par rapport à l'axe central (A) et s'étend à proximité de la face interne (7b) du média filtrant (7).

6. Filtre selon l'une quelconque des revendications précédentes, dans lequel le flasque inférieur (12) s'étend globalement selon un plan transversal (P) perpendiculaire à l'axe central (A) et les moyens de montage comprennent un filetage externe (3c) qui s'étend entre le plan transversal et le fond (3a).

7. Filtre selon l'une quelconque des revendications précédentes, dans lequel le flasque inférieur (12) comporte une collerette parallèle à la portion radiale (12a) et en contact axial avec l'extrémité supérieure (3b) de la pièce d'obturation (3), ce grâce à quoi le média filtrant (7) présente une extrémité axiale inférieure (7d) logée à l'intérieur de la pièce d'obturation (3).

8. Filtre selon l'une quelconque des revendications précédentes, dans lequel le boîtier (2) comporte une tête de filtre (4) qui présente ladite entrée (4a) et ladite sortie (4b), la tête de filtre comportant un conduit séparateur relié à la sortie (4b) qui forme un organe mâle tubulaire (40) en contact étanche annulaire avec ou relié de façon étanche à un bord interne (11b) du flasque supérieur (11) et/ou un bord interne du flasque inférieur (12).

9. Filtre selon la revendication 8, dans lequel le flasque supérieur (11) et le flasque inférieur (12) comportent chacun une portion radiale (11a, 12a) ayant une épaisseur déterminée (e), de préférence identique pour lesdits flasques (11, 12), qui est inférieure à l'épaisseur minimale de la pièce d'obturation (3).

10. Cartouche filtrante monobloc, adaptée pour former la cartouche filtrante amovible d'un filtre à carburant (1) séparateur d'eau selon l'une quelconque des revendications 1 à 9, comprenant :
- un élément filtrant (6) qui présente une extrémité supérieure sous la forme d'un premier flasque (11), une extrémité inférieure sous la forme d'un deuxième flasque (12), un média filtrant (7) sensiblement annulaire s'étendant autour d'un axe central (A) entre le premier flasque (11) et le deuxième flasque (12), le média filtrant (7) ayant une face interne (7b) qui délimite un espace intérieur (9),
- un compartiment inférieur (V2) d'accumulation d'eau séparée, le compartiment inférieur (V2) étant délimité sous le deuxième flasque (12) par une pièce d'obturation (3) qui présente un fond (3a), la pièce d'obturation (3) comprenant une paroi latérale (30) tubulaire avec une extrémité supérieure (3b) annulaire entourant une ouverture qui est de préférence au moins aussi large que le fond, de sorte que la pièce d'obturation (3) forme une cuve qui s'étend entre ledit fond (3a) et l'extrémité supérieure (3b),
et dans laquelle la pièce d'obturation (3) comporte des moyens de fixation amovible agencés sur la paroi latérale (30) pour une fixation avec une tête de filtre (4),
**caractérisée en ce que** le premier flasque (11) correspond à une extrémité supérieure de la cartouche filtrante monobloc, le deuxième flasque (12) comprenant :
- une portion radiale (12a) s'étendant perpendiculairement à l'axe central (A),
- au moins un conduit de communication (02) entre ladite zone de séparation d'eau au-dessus du deuxième flasque (12) et le compartiment inférieur (V2), permettant de faire passer de l'eau au travers de la portion radiale (12a) ; et
- un bord externe annulaire (12d) agencé à la périphérie de la portion radiale (12a) et fixé de manière étanche à ladite pièce d'obturation (3) pour réaliser une connexion de l'élément filtrant (6) à distance du fond (3a), de sorte que le compartiment inférieur (V2) d'accumulation d'eau ne puisse être approvisionné qu'à travers l'au moins un conduit de communication (02), le bord externe annulaire (12d) présentant une face radialement externe fixée de manière étanche à l'extrémité supérieure (3b),
**et en ce que** l'élément filtrant (6) est adapté pour séparer l'eau dans une zone de séparation d'eau au-dessus du deuxième flasque (12).

11. Cartouche selon la revendication 10, comprenant un tube interne (8) qui est en contact, de préférence par des reliefs (R), avec la face interne (7b) du média filtrant (7), ladite zone de séparation s'étendant le long du tube interne (8) dans l'espace intérieur (5).

12. Procédé de fabrication d'une cartouche filtrante selon la revendication 10 ou 11, comprenant les étapes consistant essentiellement à :
- former le compartiment d'accumulation d'eau dans un volume intérieur d'une pièce d'obturation (3) qui forme une partie inférieure amovible d'un boîtier (2) ; et
- assembler un élément filtrant (6) avec la pièce d'obturation (3), l'élément filtrant comprenant un premier flasque (11) formant une extrémité supérieure, un deuxième flasque (12) formant une extrémité inférieure et un média filtrant (7) sensiblement annulaire qui s'étend autour d'un axe central (A) entre le premier flasque (11) et le deuxième flasque (12), le média filtrant (7) ayant une face interne (7b) qui délimite un espace intérieur (9) ;
**caractérisé en ce que** l'assemblage de l'élément filtrant (6) comprend une fixation étanche permanente sur une surface annulaire de la pièce d'obturation, par soudure, collage, montage serrant ou par surmoulage, d'un bord externe annulaire (12d) agencé à la périphérie de la portion radiale (12a) du deuxième flasque (12), de façon à ce qu'une face radialement externe définissant un périmètre extérieur du bord externe (12d) soit fixée de manière étanche à la pièce d'obturation (3), ce grâce à quoi le compartiment d'accumulation d'eau ne peut être approvisionné que par l'intermédiaire d'au moins un conduit (02) de communication du deuxième flasque (12).

13. Procédé selon la revendication 12, dans lequel l'assemblage de l'élément filtrant (6) avec la pièce d'obturation (3) est réalisé par surmoulage.

## Patentansprüche

1. Kraftstofffilter (1) mit Wasserabscheider, aufweisend:
- ein Außengehäuse (2) mit einem Boden (3a) und einem von dem restlichen Gehäuse abnehmbaren Verschlussstück (3), wobei das Verschlussstück (3) eine rohrförmige Seitenwand (30) mit einem ringförmigen oberen Ende (3b) aufweist, das eine Öffnung umgibt, die vorzugsweise mindestens ebenso groß wie der Boden ist, so dass das Verschlussstück (3) eine sich zwischen dem Boden (3a) und dem oberen Ende (3b) erstreckende Wanne bildet, wobei das Gehäuse (2) ein Innenvolumen (V) begrenzt und einen Eingang für ungefilterten Kraftstoff (4a) und einen Ausgang für gefilterten Kraftstoff (4b) aufweist, die in einem Abstand von dem Verschlussstück angeordnet sind, wobei das Verschlussstück (3) an der Seitenwand (30) und vorzugsweise in der Nähe des oberen Endes (3b) Verbindungseinrichtungen zum Verbinden des Verschlussstücks mit dem restlichen Gehäuse (2) aufweist;
- ein Filterelement (6), das in einer oberen Kammer (V1) des Innenvolumens (V) angeordnet ist, wobei das Filterelement (6) ein oberes Ende, ein unteres Ende im Abstand zum Boden (3a) und ein im Wesentlichen ringförmiges Filtermedium (7) aufweist, das sich um eine zentrale Achse (A) zwischen dem oberen Ende und dem unteren Ende erstreckt und eine Innenfläche (7b) hat, die einen Innenraum (9) begrenzt;
- eine von dem Verschlussstücks (3) begrenzte untere Kammer (V2) des Innenvolumens (V), in welcher sich das abgeschiedene Wasser sammeln kann;
wobei das Filterelement (6) eine mit dem Eingang für ungefilterten Kraftstoff (4a) in Verbindung stehende stromaufwärtsseitige Zone (Z1) und eine mit dem Ausgang für gefilterten Kraftstoff (4b) in Verbindung stehende stromabwärtsseitige Zone (Z2) begrenzt, wobei das untere Ende des Filterelements (6) einen Flansch (12) aufweist, der die stromaufwärtsseitige Zone (Z1) und die untere Kammer (V2) auf dichte Weise voneinander trennt und der aufweist:
- einen radialen Abschnitt (12a), der sich senkrecht zur zentralen Achse (A) erstreckt;
- mindestens einen Verbindungskanal (02) zwischen der oberen Kammer (V1) und der unteren Kammer (V2), um dem Wasser zu erlauben, den radialen Abschnitt (12a) zu passieren; und
- einen ringförmigen Außenrand (12d), der am Umfang des radialen Abschnitts (12a) angeordnet ist,
**dadurch gekennzeichnet, dass** der Filter ferner eine Verbindung des Filterelements (6) mit dem Verschlussstück (3) aufweist, derart, dass das Verschlussstück (3) und das Filterelement (6) eine einteilige Filterkartusche bilden, die von dem restlichen Gehäuse (2) abnehmbar ist, wobei der Außenrand (12d) in einer ringförmigen Befestigungszone (Z3) auf dichte Weise an dem oberen Ende (3b) des Verschlussstücks (3) befestigt ist, um die Verbindung des Filterelements (6) zu realisieren, wobei die ringförmige Befestigungszone (Z3) bezüglich einer Außenfläche (7a) des Filterelements (7) radial nach außen versetzt ist, wobei der ringförmige Außenrand (12d) eine dichte Barriere zwischen der stromaufwärtsseitigen Zone (Z1) und der unteren Kammer (V2) bildet;
und dadurch, dass der mit dem Verschlussstück (3) verbundene Flansch (12) ein unterer Flansch des Filterelements (6) ist, wobei ein oberer Flansch (11), der einem oberen Ende der einteiligen Filterkartusche entspricht, am oberen Ende des Filterelements vorgesehen ist, wobei das Filterelement (6) konfiguriert ist, um Wasser in einer Wasserabscheidungszone oberhalb des unteren Flansches (12) abzuscheiden.

2. Filter nach Anspruch 1, wobei das Filterelement (6) konfiguriert ist, um das Wasser in dem Innenraum (9) abzuscheiden, der auf Seite des oberen Endes des Filterelements (6) mit dem Ausgang für gefilterten Kraftstoff (4b) in Verbindung steht.

3. Filter nach Anspruch 1 oder 2, wobei der Außenrand (12d) von einer Innenfläche (36) des oberen Endes (3b) des Verschlussstücks (3) umgeben ist und eine radial äußere Fläche aufweist, die auf dichte Weise an dem Verschlussstück (3) durch Schweißen, Kleben, Klemmen oder Überformen an der Innenfläche (36) des oberen Endes des Verschlussstücks (3) befestigt ist.

4. Filter nach einem der vorstehenden Ansprüche, wobei der ringförmige Außenrand (12d) des unteren Flansches (12) eine Verbindungsstelle zum Verbinden mit dem Verschlussstück (3) aufweist, die zwei periphere Flächen hat, die zwischen sich einen Winkel ungleich Null, vorzugsweise einen Winkel von ungefähr 90° bilden.

5. Filter nach einem der vorstehenden Ansprüche, wobei der mindestens eine Verbindungskanal (02) bezüglich der zentralen Achse (A) radial versetzt ist und sich in der Nähe der Innenfläche (7b) des Filtermediums (7) erstreckt.

6. Filter nach einem der vorstehenden Ansprüche, wobei der untere Flansch (12) sich allgemein in einer transversalen Ebene (P), die senkrecht zur zentralen Achse (A) ist, erstreckt und die Verbindungseinrichtungen ein Außengewinde (3c) aufweisen, das sich zwischen der transversalen Ebene und dem Boden (3a) erstreckt.

7. Filter nach einem der vorstehenden Ansprüche, wobei der untere Flansch (12) einen Kragen, der parallel zum radialen Abschnitt (12a) ist und in axialem Kontakt mit dem oberen Ende (3b) des Verschlussstücks (3) ist, aufweist, dank dessen das Filtermedium (7) ein im Innern des Verschlussstücks (3) eingesetztes axiales unteres Ende (7d) aufweist.

8. Filter nach einem der vorstehenden Ansprüche, wobei das Gehäuse (2) einen Filterkopf (4) aufweist, der den Eingang (4a) und den Eingang (4b) aufweist, wobei der Filterkopf einen an dem Ausgang (4b) angeschlossenen Abscheiderkanal in Form eines rohrförmigen männlichen Elements (40) aufweist, das in einem dichten ringförmigen Kontakt oder dicht verbunden mit einem Innenrand (11b) des oberen Flansches (11) und/oder einem Innenrand des unteren Flansches (12) ist.

9. Filter nach Anspruch 8, wobei sowohl der obere Flansch (11) wie auch der untere Flansch (12) jeweils einen radialen Abschnitt (11a, 12a) einer vorgegebenen, vorzugsweise bei beiden Flanschen (11, 12) gleichen, Dicke (e) haben, die kleiner als die minimale Dicke des Verschlussstücks (3) ist.

10. Einteilige Filterkartusche, die konfiguriert ist, um die abnehmbare Filterkartusche eines wasserabscheidenden Kraftstofffilters (1) nach einem der Ansprüche 1 bis 9 zu bilden, aufweisend:
- ein Filterelement (6), das ein oberes Ende in Form eines ersten Flansches (11), ein unteres Ende in Form eines zweiten Flansches (12) und ein im Wesentlichen ringförmiges Filtermedium (7) aufweist, das sich um eine zentrale Achse (A) zwischen dem ersten Flansch (11) und dem zweiten Flansch (12) erstreckt und eine Innenfläche (7b) hat, die einen Innenraum (9) begrenzt,
- eine untere Kammer (V2) zum Sammeln von abgeschiedenem Wasser, wobei die untere Kammer (V2) unterhalb des zweiten Flansches (12) von einem Verschlussstück (3) begrenzt ist, das einen Boden (3a) aufweist, wobei das Verschlussstück (3) eine rohrförmige Seitenwand (30) mit einem ringförmigen oberen Ende (3b) aufweist, das eine Öffnung umgibt, die vorzugsweise mindestens ebenso groß wie der Boden ist, so dass das Verschlussstück (3) eine Wanne bildet, die sich zwischen dem Boden (3a) und dem oberen Ende (3b) erstreckt,
und wobei das Verschlussstück (3) an der Seitenwand (30) angeordnete Verbindungseinrichtungen zum Herstellen einer lösbaren Verbindung mit einem Filterkopf (4) aufweist,
**dadurch gekennzeichnet, dass** der erste Flansch (11) einem oberen Ende der einteiligen Filterkartusche entspricht, wobei der zweite Flansch aufweist:
- einen radialen Abschnitt (12a), der sich senkrecht zur zentralen Achse (A) erstreckt;
- mindestens einen Verbindungskanal (02) zwischen der Wasserabscheidungszone oberhalb des zweiten Flansches (12) und der unteren Kammer (V2), um dem Wasser zu erlauben, den radialen Abschnitt (12a) zu passieren; und
- einen ringförmigen Außenrand (12d), der am Umfang des radialen Abschnitts (12a) angeordnet ist und auf dichte Weise an dem Verschlussstück (3) befestigt ist, um eine Verbindung des Filterelements (6) im Abstand zum Boden (3a) zu realisieren, so dass die untere Wassersammelkammer (V2) nur über den mindestens einen Verbindungskanal (02) beschickt werden kann, wobei der ringförmige Außenrand (12d) eine radial äußere Fläche aufweist, die auf dichte Weise an dem oberen Ende (3b) befestigt ist,
und dadurch, dass das Filterelement (6) konfiguriert ist, um Wasser in einer Wasserabscheidungszone oberhalb des zweiten Flansches (12) abzuscheiden.

11. Kartusche nach Anspruch 10, aufweisend ein Innenrohr (8), das, vorzugsweise über Reliefs (R), in Kontakt mit der Innenfläche (7b) des Filtermediums (7) ist, wobei die Abscheidungszone sich entlang des Innenrohrs (8) in dem Innenraum (9) erstreckt.

12. Verfahren zur Herstellung einer Filterkartusche nach Anspruch 10 oder 11, aufweisend die Schritte, die im Wesentlichen darin bestehen:
- die Wassersammelkammer in einem Innenvolumen eines Verschlussstücks (3) zu bilden, das einen abnehmbaren unteren Teil eines Gehäuses (2) bildet; und
- ein Filterelement (6) mit dem Verschlussstück (3) zusammenzufügen, wobei das Filterelement einen ersten Flansch (11), der ein oberes Ende bildet, einen zweiten Flansch (12), der ein unteres Ende bildet, und ein im Wesentlichen ringförmiges Filtermedium (7) aufweist, das sich um eine zentrale Achse (A) zwischen dem ersten Flansch (11) und dem zweiten Flansch (12) erstreckt, wobei das Filtermedium (7) eine Innenfläche (7b) aufweist, die einen Innenraum (9) begrenzt;
**dadurch gekennzeichnet, dass** das Zusammenfügen des Filterelements (6) eine dichte dauerhafte Befestigung durch Schweißen, Kleben, Klemmen oder Überformen eines am Umfang des radialen Abschnitts (12a) des zweiten Flansches (12) angeordneten ringförmigen Außenrands (12d) an einer ringförmigen Oberfläche des Verschlussstücks aufweist, derart, dass eine radial äußere Fläche, die einen Außenumfang des Außenrands (12d) definiert, auf dichte Weise an dem Verschlussstück (3) befestigt ist, dank dessen die Wassersammelkammer nur auf dem Wege über den mindestens einen Verbindungskanal (02) des zweiten Flansches (12) beschickt werden kann.

13. Verfahren nach Anspruch 12, wobei das Zusammenfügen des Filterelements (6) mit dem Verschlussstück (3) mittels Überformen erfolgt.

## Claims

1. A water-separating fuel filter (1) comprising:
- an external housing (2) having a bottom (3a) and comprising a closure part (3) removable from the remainder of the housing, the closure part (3) comprising a tubular side wall (30) with an annular upper end (3b) surrounding an opening which is preferably at least as wide as the bottom, so that the closure part (3) forms a tank which extends between said bottom (3a) and the upper end (3b), the housing (2) defining an internal volume (V) and having a raw fuel inlet (4a) and a filtered fuel outlet (4b) arranged away from the closure piece, the closure part (3) including, on said side wall (30) and preferably near the upper end (3b), mounting means between the closure part and the remainder of the housing (2);
- a filter element (6) arranged in an upper compartment (V1) of the internal volume (V), the filter element (6) having an upper end, a lower end at a distance from the bottom (3a) and a substantially annular filtering medium (7) extending around a central axis (A) between the upper end and the lower end, the filtering medium (7) having an inner face (7b) defining an interior space (9);
- a lower compartment (V2) of the inner volume (V) defined by said closure part (3) and wherein the separated water can accumulate; in which the filter element (6) defines an upstream zone (Z1) communicates with the raw fuel inlet (4a) and a downstream zone (Z2) communicating with the filtered fuel outlet (4b), the lower end of the filter element (6) having a flange (12) which sealingly separates the upstream zone (Z1) from the lower compartment (V2) and which comprises:
- a radial portion (12a) extending perpendicularly to the central axis (A),
- at least one communication duct (02) between the upper compartment (V1) and the lower compartment (V2), for passing water through the radial portion (12a); and
- an annular outer edge (12d) arranged at the periphery of the radial portion (12a), **characterized in that** the file further comprises a connection of the filter element (6) with the closure part (3) so that the closure part (3) and the filter element (6) form an integral filter cartridge which is removable from the remainder the housing (2), said outer edge (12d) being sealingly attached to said upper end (3b) of the closure part (3) in an annular attachment area (Z3) to connect with the filter element (6), the annular attachment area (Z3) being offset radially and outwardly relative to an outer face (7a) of the filter medium (7), the annular outer edge (12d) forming a sealed barrier between the upstream zone (Z1) and the lower compartment (V2);
and **in that** the flange (12) connected to the closure part (3) is an inner flange of the filter element (6), an upper flange (11) corresponding to an upper end of the integral filter cartridge being envisaged at the upper end of the filter element, the filter element (6) being adapted to separate water into a water separation zone above the lower flange (12).

2. A filter according to claim 1, wherein the filter element (6) is adapted to separate the water into the interior space (9) communicating, on the side of the upper end of the filter element (6), with the filtered fuel outlet (4b).

3. A filter according to claim 1 or 2, wherein the outer edge (12d) is surrounded by an inner face (36) of the upper end (3b) of the closure part (3) and has a radially outer face attached sealingly to the closure part (3) by welding, gluing, press mounting or overmolding on said inner face (36) of the upper end of the closure part (3).

4. A filter according to any preceding claim, wherein the annular outer edge (12d) of the flange (12) has a connecting interface with the closure part (3) including two peripheral surfaces forming between them a non-zero angle, preferably an angle of about 90 °.

5. A filter according to any one of the preceding claims, wherein said at least one communication duct (02) is radially offset from the central axis (A) and extends near the internal face (7b) of the filter medium (7).

6. A filter according to any one of the preceding claims, wherein the flange (12) extends in a generally transverse plane (P) perpendicular to the central axis (A) and the mounting means comprise an outer thread (3c) which extends between the transverse plane and the bottom (3a).

7. A filter according to any one of the preceding claims, wherein the lower flange (12) has a skirt parallel to the radial portion (12a) and in axial contact with the upper end (3b) of the closure part (3), due to which the filtering medium (7) has a lower axial end (7d) housed inside of the closure part (3).

8. A filter according to any preceding claim, wherein the housing (2) has a filter head (4) having said inlet (4a) and said outlet (4b), the filter head comprising a separator pipe connected to the outlet (4b) which forms a tubular male member (40) in annular sealing contact with or tightly connected to an inner edge (11b) of the upper flange (11) and/or an inner edge of the lower flange (12).

9. A filter according to claim 8, wherein the upper flange (11) and the lower flange (12) each comprise a radial portion (11a, 12a) having a given thickness (e), preferably identical to said flanges (11, 12), which is less than the minimum thickness of the closure part (3).

10. An integral filter cartridge adapted to form the removable filter cartridge of a water-separating fuel filter (1) according to any one of claims 1 to 9, comprising:
- a filter element (6) having an upper end in the form of a first flange (11), a lower end in the form of a second flange (12), a filter medium (7) substantially annular extending about a central axis (A) between the first flange (11) and the second flange (12), the filter medium (7) having an inner face (7b) defining an interior space (9),
- a lower compartment (V2) for accumulating separated water, the lower compartment (V2) being defined below the second flange (12) by a closure part (3) having a bottom (3a), the closure part (3) comprising a tubular side wall (30) with an annular upper end (3b) surrounding an opening which is preferably at least as wide as the bottom, so that the closure part (3) forms a tank which extends between said bottom (3a) and the upper end (3b),
and wherein the closure part (3) comprises removable attachment means arranged on the side wall (30) for attachment with a filter head (4),
**characterized in that** the first flange (11) corresponds to an upper end of the integral filter cartridge, the second flange (12) comprising:
- a radial portion (12a) extending perpendicularly to the central axis (A),
- at least one communication duct (02) between said water separation zone above the second flange (12) and the lower compartment (V2), for passing water through the radial portion (12a); and
- an annular outer edge (12d) arranged at the periphery of the radial portion (12a) and sealingly attached to said closure part (3) for making a filter element (6) connection at a distance from the bottom (3a), so that the lower water storage compartment (V2) can be supplied only through the at least one communication duct (02), the annular outer edge (12d) having a radially outer face sealingly secured to the upper end (3b) and **in that** the filter element (6) is adapted to separate water into a water separation zone above the second flange (12).

11. A cartridge according to claim 10, comprising an inner tube (8) which is in contact, preferably by reliefs (R), with the internal face (7b) of the filter medium (7), said separation zone extending along the inner tube (8) in the interior space (9).

12. A method of manufacturing a filter cartridge according to claim 10 or 11, comprising the steps consisting essentially of:
- forming the water storage compartment in an interior volume of a closure part (3) which forms a removable lower part of a housing (2); and
- assembling a filter element (6) with the closure part (3), the filter element comprising a first flange (11) forming an upper end, a second flange (12) forming a lower end and a substantially annular filtering medium (7) extending around a central axis (A) between the first flange (11) and the second flange (12), the filter medium (7) having an inner face (7b) defining an interior space (9);
**characterized in that** the assembly of the filter element (6) comprises a permanent sealed attachment on an annular surface of the closure part, by welding, gluing, press mounting or overmolding of an annular outer edge (12d) arranged at the periphery of the radial portion (12a) of the second flange (12), so that a radially outer face defining an outer perimeter of the outer edge (12d) is sealingly attached to the closure part (3), whereby the water storage chamber can be supplied only by means of at least one communication duct (02) of the second flange (12).

13. A method of claim 12, wherein the assembly of the filter element (6) with the closure part (3) is produced by overmolding.
